# FASCICULE DE BREVET EUROPEEN

(11) **EP 3 384 060 B1**
(45) Date de publication et mention de la délivrance du brevet: **05.04.2023**
(21) Numéro de dépôt: 16804833.8
(22) Date de dépôt: 07.11.2016
(51) Int. Cl.: C22C 21/04, C22F 1/043, C22C 21/02

(54) **TOLE MINCE A HAUTE RIGIDITE POUR CARROSSERIE AUTOMOBILE**
HOCHSTEIFES DÜNNES BLECH FÜR EINE FAHRZEUGKAROSSERIE
HIGHLY RIGID THIN SHEET METAL FOR CAR BODY

(30) Priorité: 01.12.2015 FR 1561647; 15.06.2016 FR 1655564
(43) Date de publication de la demande: 10.10.2018
(73) Titulaire: Constellium Neuf-Brisach, 68600 Biesheim (FR)
(72) Inventeur: RATCHEV, Petar, 38500 Voiron (FR); MASSE, Jean-Philippe, 38000 Grenoble (FR); CHABRIOL, Christophe, 38260 Champier (FR); SHAHANI, Ravi, 38340 Voreppe (FR); DOLEGA, Lukasz, 38950 Saint Martin Le Vinoux (FR)
(74) Mandataire: Constellium - Propriété Industrielle
(86) Numéro de dépôt international: PCT/FR2016/052878
(87) Numéro de publication internationale: WO 2017/093627

(56) Documents cités:
- WO-A1-2012/043030
- JP-A- S59 126 747

## Description

### Domaine de l'invention

L'invention concerne le domaine des tôles en alliage d'aluminium destinées à la fabrication par emboutissage de pièces de doublure, de structure ou de renfort de la caisse en blanc des véhicules automobiles.

### Etat de la technique

Les alliages d'aluminium sont utilisés de manière croissante dans la construction des véhicules automobiles car leur utilisation permet de réduire le poids des véhicules et ainsi diminuer la consommation de carburant et les rejets de gaz à effets de serre.

Les tôles en alliage d'aluminium sont utilisées notamment pour la fabrication de nombreuses pièces de la « caisse en blanc » parmi lesquelles on distingue : les pièces de peau de carrosserie (ou panneaux extérieurs de carrosserie) comme les ailes avant, le toit ou pavillon, les peaux de capot, de coffre ou de porte ; les pièces de doublure comme par exemple les doublures de porte, d'aile, de hayon ou de capot ; et enfin les pièces de structure, comme par exemple les longerons, les tabliers, les planchers de charges et les pieds avant, milieu et arrière.

Si de nombreuses pièces de peau sont déjà réalisées en tôles d'alliages d'aluminium, la transposition de l'acier à l'aluminium pour des pièces de renfort notamment de type doublure ou de structure, présentant des caractéristiques plus élevées, s'avère plus délicate du fait dans un premier temps de la moins bonne formabilité des alliages d'aluminium par rapport aux aciers et du fait dans un deuxième temps des caractéristiques mécaniques en générales moins élevées que celles des aciers utilisés pour ce type de pièces.

En effet, pour des applications de type renfort ou structure, un ensemble de propriétés, parfois antagonistes est requis telles que :
- une formabilité élevée à l'état de livraison, état T4, en particulier pour les opérations d'emboutissage,
- une limite d'élasticité contrôlée à l'état de livraison de la tôle pour maîtriser le retour élastique lors de la mise en forme,
- une résistance mécanique élevée après revenu et/ou après cataphorèse et cuisson des peintures pour obtenir une bonne résistance mécanique en service tout en minimisant le poids de la pièce,
- une bonne capacité à l'absorption d'énergie en cas de choc pour application à des pièces de structure de caisse,
- un bon comportement dans les divers procédés d'assemblage utilisés en carrosserie automobile tels que le soudage par points, le soudage laser, le collage, le clinchage ou le rivetage,
- une bonne résistance à la corrosion, notamment la corrosion intergranulaire, la corrosion sous contrainte et la corrosion filiforme de la pièce finie,
- une compatibilité avec les exigences du recyclage des déchets de fabrication ou des véhicules recyclés,
- un coût acceptable pour une production en grande série.

Une propriété importante a cependant été souvent négligée, il s'agit de la rigidité de l'alliage qui est liée à son module d'élasticité. Ainsi, un matériau dont le module d'élasticité (parfois aussi appelé module d'Young) est très élevé est dit rigide. Ainsi quand le matériau est rigide il peut être possible pour certaines pièces pour lesquelles il s'agit d'un facteur limitant de diminuer l'épaisseur de la pièce par rapport aux pièces actuellement utilisées et ainsi d'obtenir un gain de poids. On rencontre essentiellement des pièces de ce type pour des pièces de renfort ou de structure.

La demande de brevet WO 95/34691 concerne une tôle en alliage d'aluminium destinée à la construction mécanique, aéronautique ou spatiale caractérisée par la composition (% en poids) Si 6.5 - 11%, Mg 0,5 - 1,0 %, Cu < 0,8%, Fe < 0,3%, Mn < 0,5%, et/ou Cr < 0,5%, Sr 0,008 - 0,025%, Ti < 0,02%, total autres éléments < 0,2%, reste aluminium. Les tôles selon cette demande de brevet présentent un module d'élasticité élevé et une faible densité et peuvent être utilisées en particulier pour les intrados d'ailes et le revêtement de fuselage d'avion, ainsi que pour les réservoirs cryogéniques de fusées.

Le brevet US 4,126,486 décrit la fabrication de tôles en alliage AlSi contenant de 4 à 15% de Si par coulée continue entre deux cylindres refroidis. Les bandes obtenues sont soumises à une réduction d'épaisseur d'au moins 60% par laminage à froid puis soumises à un traitement thermique à une température de 250 à 400 °C. Ces tôles sont utilisées pour des applications pour lesquelles de faibles résistances mécaniques sont acceptables.

Le brevet EP 0 790 325 décrit des produits filés pour décolletage de composition (% en poids) Si 11 - 13,5%, Mg 0,5 - 2,0 %, Cu < 0,35%, Fe < 1,0%, Mn < 1,2%, Cr < 0,1%, Sr 0,02 - 0,1%, Zr < 0,1%, Ni < 0,1%, Zn < 0,1 % Bi < 1,0 %, Pb < 1,0 %, Sn < 1,0 %, Ti < 0,02%, reste aluminium et impuretés inévitables.

La demande de brevet US 2004/0143102 décrit notamment un alliage d'aluminium comprenant) Si 0,3 - 12,5%, Mg 0,1 - 6 %, Cu 0,01 - 1%, Sr 0,001 - 0,5%, Zn 0,01 - 3 % reste aluminium et impuretés inévitables.

La demande WO2012/043030 concerne un procédé sans flux de brasage en surface de deux éléments en alliage d'aluminium à l'aide d'une feuille de brasage monocouche. Tout en maintenant la température de brasage à 570C ou plus dans une atmosphère de gaz inerte et en appliquant une pression de surface d'au moins 0,6 gf/mm2, les éléments en alliage d'aluminium, qui ont une température de solidus de 570°C ou plus, sont brasés sans flux dans un état dans lequel une feuille de brasage monocouche d'une épaisseur de 15 à 200 µm comprenant un matériau de brasage (ayant une composition de composants de 3 à 12 % en masse de Si, 0,1 à 5,0 % en masse de Mg et la partie restante constituée d'Al et d'impuretés inévitables) est positionnée entre et en contact superficiel avec les éléments en alliage d'aluminium.

La demande JP59126747 a pour objectif : Obtenir une tôle ayant une résistance améliorée à la rainure d'érosion en revêtant une partie centrale constituée d'un alliage d'Al résistant à la corrosion avec un métal d'apport de brasage constitué d'un alliage d'Al contenant du Si, Mg et Bi comme élément d'addition. La solution est : Un métal d'apport de brasage composé d'un alliage d'aluminium composé de, en poids, 10,7-13,0 % Si, 0,4-2,0 % Mg, <+0,1 % Bi et le reste Al avec des impuretés inévitables. Mg et Bi dans l'alliage satisfont l'équation Mg%<+ -16XBi%+2. La partie centrale constituée d'un alliage d'Al résistant à la corrosion est plaquée sur une ou deux faxes avec ledit métal d'apport de brasage pour fabriquer une feuille de brasage sous vide pour Al. La feuille a une résistance améliorée à la rainure d'érosion lors du brasage sous vide.

### Problème posé

Le but de la présente invention est de fournir des tôles en alliage d'aluminium pour renfort ou structure de carrosserie automobile présentant une rigidité élevée, tout en ayant les autres caractéristiques acceptables : une résistance mécanique en service, après mise en forme et cuisson des peintures aussi élevée que les tôles de l'art antérieur, une bonne résistance à la corrosion, en particulier intergranulaire ou filiforme, une formabilité par emboutissage à température ambiante satisfaisante et un bon comportement dans les divers procédés d'assemblage tels que le soudage par points, le soudage laser, le collage, le clinchage ou le rivetage.

### Objet de l'invention

L'invention a pour objet une tôle mince, dont l'épaisseur uniforme est comprise entre 0,20 mm et 6 mm, dans un état T4, pour pièce de renfort ou de structure de carrosserie automobile en alliage d'aluminium de composition, en % en poids, :
Si : 10 - 14,
Mg : 0,05 - 0,8,
Cu : 0 - 0,2,
Fe : 0 - 0,5,
Mn : 0 - 0,5,
optionnellement au moins un élément choisi parmi Na, Ca, Sr, Ba, Yt et Li, la quantité dudit élément s'il est choisi étant de 0,01 - 0,05 pour Na, Ca, Sr, Ba Yt et 0,1 - 0,3 pour Li,
Sb : 0 - 0,05
Cr: 0 - 0,1
Ti : 0 - 0,2
autres éléments < 0,05 chacun et < 0,15 au total, reste aluminium.

Elle a également pour objet un procédé de fabrication des tôles minces selon l'invention comportant les étapes successives suivantes :
- la coulée typiquement semi-continue verticale d'une plaque de composition selon l'invention et optionnellement le scalpage,
- optionnellement l'homogénéisation,
- le réchauffage à une température comprise entre 400 et 560°C
- le laminage à chaud de la plaque en une bande d'épaisseur comprise entre 2 et 12 mm, optionnellement le laminage à froid jusqu'à l'épaisseur finale, comprise entre 0,20 mm et 6 mm,
- la mise en solution de la tôle entre 500 et 560°C pendant 1 s à 5 min, suivi du refroidissement jusqu'à une température inférieure à 200 °C,
- optionnellement un traitement thermique à une température comprise entre 40 et 150 °C pendant une durée de 1 à 15 heures,
- le vieillissement à température ambiante d'au moins 3 jours pour obtenir un état T4.

Encore un autre objet de l'invention est l'utilisation d'une tôle mince selon l'invention pour réaliser une pièce de renfort ou de structure de carrosserie automobile.

### Description des figures

La Figure 1 montre la structure obtenue après coulée pour les lingots 1 et 2 de l'exemple 1 (Figures 1a et 1b, respectivement).
La figure 2 précise les dimensions en mm des outils utilisés pour déterminer la valeur du paramètre connu de l'homme du métier sous le nom de LDH (Limit Dome Height) caractéristique de l'aptitude à l'emboutissage du matériau.
La figure 3 montre la courbe limite de formage mesurée selon la norme ASTM E2218 pour une tôle selon l'exemple 3.
La figure 4 montre la microstructure d'une tôle selon l'invention observée sur une coupe dans le plan L-TC (direction laminage x direction travers court) à l'état brut de polissage.

### Description de l'invention

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. Les définitions des états métallurgiques sont indiquées dans la norme européenne EN 515.

Les caractéristiques mécaniques statiques en traction, en d'autres termes la résistance à la rupture Rm, la limite d'élasticité conventionnelle à 0,2% d'allongement Rp0,2, l'allongement à striction Ag% et l'allongement à la rupture A%, sont déterminés par un essai de traction selon la norme NF EN ISO 6892-1, le prélèvement et le sens de l'essai étant définis par la norme EN 485-1. Le coefficient d'anisotropie plastique est déterminé selon la norme ISO 10113. Le coefficient d'écrouissage en traction est déterminé selon la norme ISO 10275.

La courbe limite de formage est déterminée selon la norme ASTM E2218.

Le module d'élasticité est mesuré selon la norme ASTM 1876.

Sauf mention contraire, les définitions de la norme EN 12258 s'appliquent. Une tôle mince est un produit laminé de section transversale rectangulaire dont l'épaisseur uniforme est comprise entre 0,20 mm et 6 mm.

Selon l'invention des tôles minces en alliage d'aluminium comprenant 10 à 14 % en poids de silicium et 0,05 - 0,8 % en poids de magnésium présentent une rigidité significativement plus élevée que les tôles en alliage 5xxx ou 6xxx traditionnellement utilisées pour réaliser des pièces de renfort ou de structure de carrosserie automobile et permettent donc de réduire l'épaisseur de ces pièces quand la rigidité est un facteur limitant. Ainsi les produits selon l'invention ont typiquement un module d'élasticité d'au moins 77 GPa alors que les produits pour pièces de renfort ou de structure de carrosserie automobile selon l'art antérieur ont typiquement un module compris entre 67 et 72 GPa. De manière surprenante il a été possible d'obtenir des tôles dont le module est plus élevé que les tôles selon l'art antérieur tout en obtenant des caractéristiques satisfaisantes pour des propriétés antagonistes telles que la formabilité ou la corrosion.

La teneur en silicium doit être au moins de 10 % et de préférence 11 % en poids, en effet une teneur inférieure ne permet pas d'atteindre un module d'élasticité suffisant. Avantageusement la teneur en silicium est au moins 11,5 % en poids et de préférence au moins 12 % en poids. La teneur en silicium doit être au plus de 14 % en poids, en effet une teneur supérieure ne permet pas d'atteindre les propriétés d'allongement et de formabilité souhaitées. Avantageusement la teneur en silicium est au plus 13,5 % en poids et de préférence au plus 13 % en poids.

La teneur en magnésium doit être au moins de 0,05 % en poids et de préférence au moins 0,1 % en poids, en effet une teneur inférieure ne permet pas d'atteindre des propriétés mécaniques suffisantes. La teneur en magnésium doit être au plus de 0,8 % en poids et de préférence au plus de 0,7%, en effet une teneur supérieure ne permet pas d'atteindre les propriétés d'allongement et de formabilité souhaitées. Dans un mode de réalisation de l'invention, la teneur en magnésium est comprise entre 0,1 et 0,3 % en poids ce qui permet d'obtenir une formabilité élevée de la tôle. L'utilisation des tôles selon ce mode de réalisation pour réaliser des pièces renfort, notamment de type de doublure comme par exemple les doublures de porte, d'aile, de hayon ou de capot est avantageuse.

Dans un autre mode de réalisation de l'invention, la teneur en magnésium est comprise entre 0,3 et 0,6 % en poids ce qui permet d'obtenir une résistance mécanique plus élevée tout en maintenant une formabilité suffisante. L'utilisation des tôles selon ce mode de réalisation pour réaliser des pièces de structure, comme par exemple les longerons, les tabliers, les planchers de charges et les pieds avant, milieu et arrière est avantageuse. La teneur en cuivre est comprise entre 0 et 0,2 % en poids. Une teneur en cuivre supérieure à 0,2 % en poids a une conséquence néfaste sur la résistance à la corrosion. Il est avantageux de réaliser l'addition d'une quantité de cuivre comprise entre 0,03 et 0,15 % en poids pour améliorer notamment la formabilité des tôles après vieillissement (état T4 par exemple) et/ou la résistance mécanique après le traitement thermique final des pièces (état T6 ou T7 par exemple).

La teneur en fer est comprise entre 0 et 0,5 % en poids. Une teneur en fer supérieure à 0,5 % en poids a une conséquence néfaste sur la formabilité. Avantageusement on réalise l'addition d'une quantité de fer comprise entre 0,1 et 0,3 % en poids pour améliorer résistance mécanique et formabilité. Il peut être avantageux de réaliser l'addition d'une quantité de fer comprise entre 0,05 et 0,2 % en poids pour améliorer plus particulièrement la formabilité, notamment pour réaliser des pièces de doublure.

La teneur en manganèse est comprise entre 0 et 0,5 % en poids. Une teneur en manganèse supérieure à 0,5 % en poids a une conséquence néfaste sur la formabilité. Dans un mode de réalisation il est avantageux de réaliser l'addition d'une quantité de manganèse comprise entre 0,05 et 0,2 % en poids pour améliorer notamment la formabilité. Cependant dans un autre mode de réalisation, on n'ajoute pas de manganèse et la teneur en manganèse est inférieure à 0,05 % en poids.

L'addition d'au moins un élément choisi parmi Na, Ca, Sr, Ba, Yt et Li, la quantité dudit élément s'il est choisi étant de 0,01 - 0,05 pour Na, Ca, Sr, Ba, Yt et 0,1 - 0,3 pour Li est avantageuse. Si l'élément n'est pas choisi comme addition sa teneur est maintenue à moins de 0,01 % en poids pour Na, Ca, Sr, Ba, Yt et moins de 0,05 % en poids pour Li. Ces éléments sont des agents modifiants permettent notamment de contrôler la taille des composés eutectiques contenant du silicium lors de la solidification et/ou de modifier leur structure ce qui a une conséquence favorable sur les propriétés mécaniques, notamment la formabilité, en particulier lors de la coulée de plaques de grandes dimensions. Le strontium est l'agent modifiant préféré et l'addition de 0,01 à 0,05 % en poids de strontium est avantageuse.

L'addition d'antimoine est avantageuse notamment pour limiter la présence de phosphore dans l'alliage, cet élément modifiant de façon défavorable la structure de l'eutectique. Dans un mode de réalisation de l'invention la teneur en antimoine est comprise entre 0,01 et 0,04 % en poids, cependant dans ce mode de réalisation l'addition d'un agent modifiant tel que le sodium ou le strontium est de préférence évitée.

La teneur en chrome est comprise entre 0 et 0,5 % en poids. Dans un mode de réalisation la quantité de chrome ajoutée est comprise entre 0,1 et 0,3 % en poids.

La teneur en titane est comprise entre 0 et 0,2 % en poids. Avantageusement on réalise l'addition d'une quantité de titane comprise entre 0,01 et 0,15 % en poids. Dans un mode de réalisation avantageux, les teneurs en Cr et en Ti sont telles que Cr : 0,01 - 0,05 % en poids et/ou Ti 0,01 - 0,15 % en poids.

Le procédé de fabrication des tôles selon l'invention comporte la coulée d'une plaque, typiquement par coulée semi-continue verticale, de composition selon l'invention et optionnellement le scalpage.

Optionnellement on peut homogénéiser la plaque ainsi obtenue, cependant l'homogénéisation peut ne pas être avantageuse et on préfère en général procéder directement au réchauffage à une température comprise entre 400 et 560°C avec avantageusement un maintien entre 30 min et 6 h. On procède ensuite au laminage à chaud de la plaque en une bande d'épaisseur comprise entre 2 et 12 mm puis optionnellement au laminage à froid pour obtenir une tôle mince ayant une épaisseur finale comprise entre 0,2 et 6mm. De manière préférée la température de début de laminage à chaud est comprise entre 400 et 550 °C. Dans un mode de réalisation avantageux de l'invention, la température de début de laminage à chaud est comprise entre 500 et 540 °C. La température de fin de laminage à chaud est de préférence comprise entre 200 et 250 °C. Dans un mode de réalisation avantageux de l'invention, la température de fin de laminage à chaud est comprise entre 210 et 240 °C. Les présents inventeurs ont constaté que le laminage en dehors des températures préférées peut conduire à une diminution sensible des propriétés mécaniques. Préférentiellement, le procédé comprend une étape de laminage à froid.

La mise en solution de la tôle mince est obtenue à une température entre 500 et 560°C pendant 1 s à 5 min. La température est avantageusement une température au-delà de la température de solvus de l'alliage et inférieure à la fusion commençante. La tôle mince est ensuite refroidie jusqu'à une température inférieure à 200 °C et de préférence inférieure à 100 °C. Préférentiellement le refroidissement est rapide, la vitesse de refroidissement étant de plus de 10°C/s et mieux d'au moins 20°C/s.

Optionnellement la tôle mince subit ensuite un traitement thermique à une température comprise entre 40 et 150 °C et de préférence entre 50 et 100 °C pendant une durée de 1 à 15 heures, ce traitement pouvant notamment être réalisé lors du refroidissement de la bobine obtenue.

La tôle mince est ensuite vieillie pendant au moins trois jours de façon à obtenir un état T4.

Les tôles selon l'invention ont avantageusement un module d'élasticité mesuré selon la norme ASTM 1876 d'au moins 77 GPa et de préférence d'au moins 79 GPa et au moins une parmi les caractéristiques suivantes, et de préférence l'ensemble des caractéristiques suivantes :
- Une limite d'élasticité comprise entre 90, de préférence 130 et 200 MPa et de préférence entre 140 et 190 MPa
- Un allongement à rupture A% d'au moins 15% et de préférence d'au moins 18%
- Un allongement à striction Ag% d'au moins 13% et de préférence d'au moins 15 %

De préférence les tôles minces selon l'invention ont un coefficient d'anisotropie plastique à 10 % de déformation plastique r₁₀ déterminé selon la norme ISO 10113 d'au moins 0,55 et de préférence d'au moins 0,60. Ces propriétés mécaniques sont avantageusement obtenues quelle que soit la direction de mesure et typiquement au moins dans la direction perpendiculaire au laminage.

Dans le mode de réalisation de l'invention dans lequel la teneur en magnésium est comprise entre 0,1 et 0,3 % en poids et qui permet d'obtenir une formabilité élevée de la tôle, les tôles obtenues par le procédé selon l'invention ont avantageusement un module d'élasticité mesuré selon la norme ASTM 1876 d'au moins 77 GPa et de préférence d'au moins 78 GPa et au moins une parmi les caractéristiques suivantes, et de préférence l'ensemble des caractéristiques suivantes :
- Une limite d'élasticité comprise entre 80 et 150 MPa et de préférence entre 90 et 130 MPa
- Un allongement à rupture A% d'au moins 18% et de préférence d'au moins 20%
- Un allongement à striction Ag% d'au moins 15% et de préférence d'au moins 17 %.

Avantageusement, les tôles selon le mode de réalisation dans lequel la teneur en magnésium est comprise entre 0,1 et 0,3 % présentent au moins une parmi les caractéristiques suivantes, et de préférence l'ensemble des caractéristiques suivantes :
- Un coefficient d'anisotropie plastique à 10 % de déformation plastique r₁₀ déterminé selon la norme ISO 10113 d'au moins 0,60 et de préférence d'au moins 0,70
- Un coefficient d'écrouissage en traction pour une déformation de 5% n₅ déterminé selon la norme ISO 10275 d'au moins 0,26,
- Une valeur minimale de la déformation majeure dans une courbe limite de formage déterminée selon la norme ASTM E2218 d'au moins 18% et de préférence d'au moins 19%.

Ces propriétés mécaniques sont avantageusement obtenues quelle que soit la direction de mesure et typiquement au moins dans la direction perpendiculaire au laminage. Les présents inventeurs ont constaté que dans le mode de réalisation dans lequel la teneur en magnésium est comprise entre 0,1 et 0,3 % les propriétés mécaniques sont particulièrement isotropes, en particulier la valeur moyenne du coefficient d'anisotropie plastique à 10% <r₁₀> = (rio(L) + 2xr₁₀(45) + r₁₀(TC))/4, où r₁₀(L) est mesuré dans la direction de laminage, r₁₀(45) est mesuré à 45° de la direction de laminage et r₁₀(TC) est mesuré à 90° de la direction de laminage, est d'au moins 0,60 et de préférence d'au moins 0,70.

Dans le mode de réalisation de l'invention dans lequel la teneur en magnésium est comprise entre 0,3 et 0,6 % en poids et qui permet d'obtenir une résistance mécanique plus élevée tout en maintenant une formabilité suffisante, les tôles obtenues par le procédé selon l'invention ont avantageusement un module d'élasticité mesuré selon la norme ASTM 1876 d'au moins 77 GPa et de préférence d'au moins 79 GPa et au moins une parmi les caractéristiques suivantes, et de préférence l'ensemble des caractéristiques suivantes :
- Une limite d'élasticité comprise entre 130 et 200 MPa et de préférence entre 140 et 190 MPa
- Un allongement à rupture A% d'au moins 15% et de préférence d'au moins 18%
- Un allongement à striction Ag% d'au moins 13% et de préférence d'au moins 15 %

Avantageusement la valeur de LDH tel que défini dans l'exemple 2 et mesurée sur une tôle d'épaisseur 3,5 mm selon l'invention est d'au moins 20 mm et de préférence d'au moins 24 mm et de manière préférée d'au moins 27 mm.

Ainsi, les tôles selon l'invention ont un module d'élasticité élevé et présentent une aptitude satisfaisante à l'emboutissage à température ambiante. Tout aussi avantageusement, elles présentent, en service, après mise en forme, assemblage, revenu et/ou cuisson des peintures, des propriétés mécaniques élevées, une bonne tenue à la corrosion, en particulier à la corrosion intergranulaire.

Les tôles minces selon l'invention ont avantageusement, à l'état vieilli naturellement revenu et/ou après cuisson des peintures, une profondeur maximale de corrosion intergranulaire mesurée selon la norme ISO 11846 inférieure à 300 µm, de préférence inférieure à 250 µm et de manière préférée inférieure à 200 µm.

Les tôles minces selon l'invention présentent une microstructure dans laquelle la distribution des particules de silicium est homogène et on n'observe pas d'agglomérats de particules. Avantageusement, la fraction surfacique de particules de silicium observée sur une coupe L-TC au grossissement de x500 à l'état brut de polissage est au moins 8%, de préférence au moins 9% et de manière préférée au moins 10 %.

Selon l'invention, on peut utiliser une tôle mince selon l'invention pour réaliser une pièce de renfort ou de structure de carrosserie automobile.

Avantageusement, dans l'utilisation selon l'invention la tôle mince est obtenue par le procédé selon l'invention puis mise en forme typiquement par emboutissage, pliage et/ou roulage puis subit un traitement thermique de revenu, ce traitement thermique pouvant être réalisé simultanément à la cuisson des peintures.

Les pièces de renfort ou de structure de carrosserie automobile de l'utilisation selon l'invention ont avantageusement en service, c'est-à-dire pendant leur utilisation dans la carrosserie automobile une limite d'élasticité d'au moins 220 MPa, de préférence d'au moins 250 MPa et un allongement à rupture d'au moins 6% et de préférence d'au moins 10 %.

Les pièces de renfort ou de structure de carrosserie automobile de l'utilisation selon l'invention ont avantageusement une profondeur maximale de corrosion intergranulaire mesurée selon la norme ISO 11846 inférieure à 300 µm et de préférence inférieure à 200 µm.

### Exemples

### Exemple 1

Des lingots de dimension d'épaisseur 50 mm ont été coulés. La composition des lingots est donnée dans le Tableau 1.

**Tableau 1, composition des lingots en % en poids**

| N° | Si | Fe | Cu | Mn | Mg | Cr | Ti | Sr |
|---|---|---|---|---|---|---|---|---|
| 1 | 11,3 | 0,26 | <0,01 | 0,10 | 0,50 | 0,05 | 0,05 | |
| 2 | 11,2 | 0,26 | <0,01 | 0,10 | 0,52 | 0,05 | 0,05 | 0,03 |
| 3 | 12,8 | 0,28 | <0,01 | 0,11 | 0,58 | 0,05 | 0,05 | 0,03 |
| 4 | 15,0 | 0,25 | <0,01 | 0,10 | 0,52 | 0,05 | 0,01 | |

Les lingots ont été réchauffés à 540°C pendant deux heures puis laminés à chaud jusqu'à l'épaisseur 9 mm puis laminés à froid jusqu'à l'épaisseur 3,5 mm. Les tôles minces ainsi obtenues ont été mises en solution à 540 °C pendant une minute puis trempées. Les tôles ont ensuite subit un traitement thermique de 8 heures à la température de 85 °C. Les tôles ont ensuite été vieillies à température ambiante pour obtenir un état T4. Certaines tôles ont également subi un traitement thermique de revenu de deux heures à 210 °C.

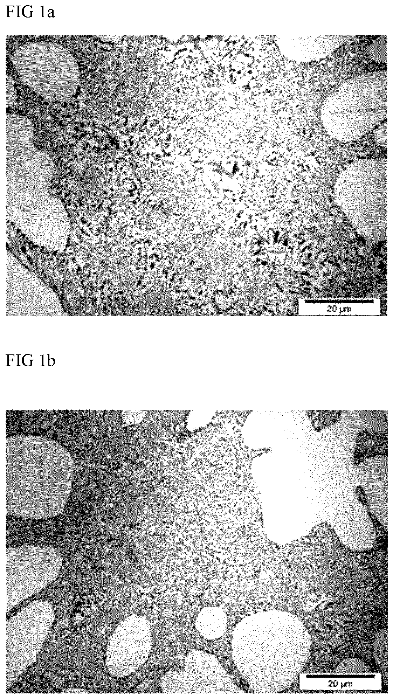

Les structures coulées ont été observées par microscopie optique. La figure 1a montre la structure obtenue pour l'alliage 1 et la structure 1b montre la structure obtenue pour l'alliage 2. L'addition de strontium permet de diminuer la taille des composés eutectiques qui apparaissent en noir ce qui est avantageux.

Les caractéristiques mécaniques ont été mesurées selon les normes NF EN ISO 6892-1, EN 485-1 et ASTM 1876 dans la direction perpendiculaire à la direction de laminage. La dimension des échantillons pour la mesure de module E était 60 x 10 x 3 mm.

Les résultats des caractérisations sont donnés dans le tableau 2.

**Tableau 2 - Propriétés mécaniques des tôles minces**

| | T4 | | | | | Revenu 2h - 210°C | | | | |
|---|---|---|---|---|---|---|---|---|---|---|
| | E (GPa) | R_{p0,2} (Mpa) | Rₘ (Mpa) | Ag% | A% | E (GPa) | Y.S. (Mpa) | UTS (Mpa) | Ag% | A% |
| 1 | 78,3 | 157 | 283 | 14,2 | 16,2 | 79,1 | 258 | 306 | 5,0 | 8,4 |
| 2 | 77,8 | 158 | 283 | 14,2 | 16,9 | 79,2 | 256 | 304 | 5,4 | 9,6 |
| 3 | 78,2 | 160 | 291 | 14,5 | 15,9 | 80,5 | 260 | 307 | 4,7 | |
| 4 | 80,8 | 154 | 269 | 8,3 | 8,3 | 81,6 | 238 | 287 | 4,5 | 4,8 |

L'alliage 4, hors invention, ne présente pas un allongement suffisant.

### Exemple 2

Des lingots d'épaisseur 50 mm ont été coulés. La composition des lingots est donnée dans le Tableau 3.

**Tableau 3, composition des lingots en % en poids**

| | Si | Fe | Cu | Mn | Mg | Cr | Ti | Sr |
|---|---|---|---|---|---|---|---|---|
| A | 12,6 | 0,26 | 0,00 | 0,11 | 0,56 | 0,02 | 0,05 | 0,03 |
| B | 12,7 | 0,25 | 0,03 | 0,10 | 0,58 | 0,02 | 0,05 | 0,04 |
| C | 12,9 | 0,27 | 0,10 | 0,11 | 0,55 | 0,02 | 0,05 | 0,03 |
| D | 12,6 | 0,27 | 0,00 | 0,11 | 0,36 | 0,02 | 0,05 | 0,04 |
| E | 12,6 | 0,10 | 0,00 | 0,10 | 0,58 | 0,02 | 0,05 | 0,04 |
| F | 12,8 | 0,20 | 0,04 | 0,10 | 0,59 | 0,02 | 0,05 | 0,04 |
| H | 12,9 | 0,27 | 0,10 | 0,11 | 0,55 | 0,02 | 0,05 | 0,03 |
| I | 12,9 | 0,27 | 0,10 | 0,11 | 0,55 | 0,02 | 0,05 | 0,03 |

Les lingots A à F ont été réchauffés à 540°C pendant deux heures puis laminés à chaud jusqu'à l'épaisseur 9 mm avec une température de début de laminage à chaud comprise entre 518 et 524 °C et une température de fin de laminage à chaud comprise entre 218 et 233 °C, puis laminés à froid jusqu'à l'épaisseur 3,5 mm. Le lingot H a été réchauffé à 460°C pendant deux heures puis laminé à chaud jusqu'à l'épaisseur 9 mm avec une température de début de laminage à chaud de 451 °C et une température de fin de laminage à chaud de 201 °C, puis laminé à froid jusqu'à l'épaisseur 3,5 mm. Le lingot I a été réchauffé à 500°C pendant deux heures puis laminé à chaud jusqu'à l'épaisseur 9 mm avec une température de début de laminage à chaud de 488 °C et une température de fin de laminage à chaud de 296 °C, puis laminé à froid jusqu'à l'épaisseur 3,5 mm. Les tôles minces ainsi obtenues ont été mises en solution à 540 °C pendant une minute puis trempées. Les tôles ont ensuite subit un traitement thermique de 8 heures à la température de 85 °C. Les tôles ont ensuite été vieillies à température ambiante pour obtenir un état T4. Certaines tôles ont également subi un traitement thermique de revenu de deux heures à 210 °C. D'autres tôles ont également subi un traitement thermique de 20 minutes à 185 °C précédé d'une pré-déformation de 2% simulant la cuisson des peintures des automobiles.

Les caractéristiques mécaniques ont été mesurées selon les normes NF EN ISO 6892-1, EN 485-1 et ASTM 1876 dans la direction perpendiculaire à la direction de laminage. La dimension des échantillons pour la mesure de module E était 60 x 10 x 3 mm. Le coefficient d'anisotropie plastique à 10 % de déformation plastique r₁₀ a été déterminé selon la norme ISO 10113.

Par ailleurs on a évalué la performance à l'emboutissage des tôles à l'état T4 à l'aide du test LDH (Limit Dome Height).

Le paramètre LDH est largement utilisé pour l'évaluation de l'aptitude à l'emboutissage des tôles. Il a fait l'objet de nombreuses publications, notamment celle de R. Thompson, « The LDH test to evaluate sheet métal formability - Final Report of the LDH Committee of the North American Deep Drawing Research Group », SAE conférence, Détroit, 1993, SAE Paper n°930815.

Il s'agit d'un essai d'emboutissage d'un flan bloqué en périphérie par un jonc. La pression de serre-flan est contrôlée pour éviter un glissement dans le jonc. Le flan, de dimensions 120 x 160 mm, est sollicité dans un mode proche de la déformation plane. Le poinçon utilisé est hémisphérique.

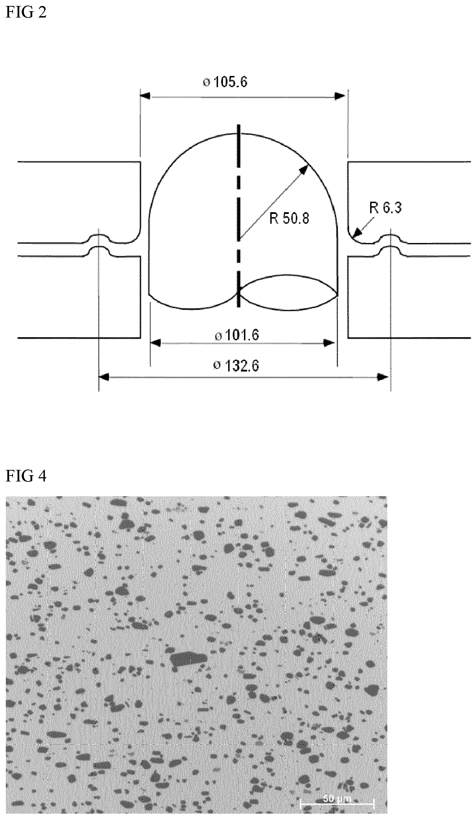

La figure 2 précise les dimensions des outils utilisés pour réaliser ce test.

La lubrification entre le poinçon et la tôle est assurée par de la graisse graphitée (graisse Shell HDM2). La vitesse de descente du poinçon est de 50 mm/min. La valeur dite LDH est la valeur du déplacement du poinçon à rupture, soit la profondeur limite de l'emboutissage. Elle correspond en fait à la moyenne de trois essais, donnant un intervalle de confiance à 95 % sur la mesure de 0,2 mm.

Des éprouvettes de 120 x 160 mm pour lesquelles la dimension de 160 mm était positionnée perpendiculairement à la direction de laminage ont été utilisées.

Les résultats des caractérisations sont donnés dans le tableau 4.

**Tableau 4 - Propriétés mécaniques des tôles minces**

| | T4 | | | | | | | Revenu 2h 210°C | | | | | Simulation cuisson peintures | | | |
|---|---|---|---|---|---|---|---|---|---|---|---|---|---|---|---|---|
| | E (GPa ) | R_{p0,2} (Mpa) | Rₘ (Mpa) | Ag% | A% | r₁₀ | LDH (mm) | E (GPa) | R_{p0,2} (Mpa) | Rₘ (Mpa) | Ag % | A% | R_{p0,2} (Mpa) | Rₘ (Mpa) | Ag% | A% |
| A | 78,0 | 173 | 309 | 15,2 | 16,9 | 0,66 | 24.3 | 79,3 | 265 | 312 | 4,8 | 8,8 | 300 | 348 | 8,6 | 12,1 |
| B | 78,7 | 174 | 302 | 15,0 | 18,1 | 0,67 | 25.7 | 79,6 | 272 | 319 | 4,6 | 6,7 | 289 | 342 | 9,3 | 12,4 |
| C | 77,7 | 181 | 317 | 15,1 | 18,9 | 0,68 | 27.1 | 80,7 | 285 | 333 | 4,8 | 8,1 | 306 | 355 | 9,0 | 12,8 |
| D | 79,1 | 155 | 282 | 16,3 | 20,1 | 0,66 | 28.0 | 79,6 | 239 | 291 | 5,9 | 10,2 | 268 | 325 | 9,3 | 13,4 |
| E | 78,9 | 178 | 306 | 14,9 | 18,2 | 0,68 | 27.0 | 79,9 | 280 | 323 | 4,7 | 7,8 | 308 | 353 | 8,0 | 10,4 |
| F | 80,6 | 187 | 318 | 13,8 | 16,1 | 0,71 | 24.1 | 80,5 | 283 | 327 | 4,2 | 6,7 | 302 | 350 | 8,3 | 10,3 |
| H | 78,9 | 179 | 314 | 14,2 | 17,1 | 0,64 | 26.4 | 79,2 | 272 | 326 | 4,6 | 6,8 | 312 | 358 | 7,8 | 10,8 |
| I | 79,1 | 173 | 309 | 15,2 | 16,9 | 0,64 | 25.2 | 80,5 | 265 | 312 | 4,8 | 8,8 | 300 | 348 | 8,6 | 12,1 |

L'alliage D présente une aptitude à la mise en forme particulièrement avantageuse. Les propriétés de résistance à la corrosion inter granulaire ont été mesurées selon la norme ISO 11846. On a notamment évalué la profondeur moyenne et la profondeur maximale de la corrosion intergranulaire. Les résultats sont présentés dans le Tableau 5. L'essai de corrosion intergranulaire selon la norme ISO 11846 consiste à immerger les éprouvettes pendant 24 h dans une solution de chlorure de sodium (30g/l) et d'acide chlorhydrique (10 ml/l) à une température de 30°C (obtenue au moyen d'un maintien en étuve sèche), après un décapage à la soude à chaud (5 % massique) et à l'acide nitrique (70 % massique) à température ambiante. Le type et la profondeur de la corrosion occasionnée sont déterminés par un examen en coupe micrographique du métal. On mesure la profondeur moyenne de corrosion et la profondeur maximale de corrosion.

**Tableau 5. Résultats des essais de corrosion intergranulaire**

| | T4 | | Revenu 2h - 210 °C | |
|---|---|---|---|---|
| | Profondeur moyenne de corrosion (µm) | Profondeur maximale de corrosion (µm) | Profondeur moyenne de corrosion (µm) | Profondeur maximale de corrosion (µm) |
| A | 5 | 32 | 25 | 42 |
| B | 11 | 27 | 46 | 141 |
| C | 27 | 204 | 84 | 186 |
| D | 25 | 207 | 25 | 91 |
| E | 5 | 17 | 21 | 55 |
| F | 28 | 186 | 40 | 112 |
| H | 38 | 251 | 118 | 169 |
| I | 46 | 177 | 86 | 145 |

### Exemple 3

Un lingot d'épaisseur 420 mm a été coulé. La composition du lingot est donnée dans le Tableau 6.

**Tableau 6, composition des lingots en % en poids**

| | Si | Fe | Cu | Mn | Mg | Cr | Ti | Sr |
|---|---|---|---|---|---|---|---|---|
| J | 12,4 | 0,15 | 0,09 | 0,10 | 0,14 | 0,02 | 0,03 | 0,03 |

Le lingot J a été réchauffé à 540°C pendant plus d'une heure puis laminés à chaud jusqu'à l'épaisseur 6,1 mm puis laminé à froid jusqu'à l'épaisseur 1,5 mm. Les tôles minces ainsi obtenues ont été mises en solution à 540 °C puis trempées. Les tôles ont ensuite été vieillies à température ambiante pour obtenir un état T4. Certaines tôles ont également subi un traitement thermique de 20 minutes à 185 °C précédé d'une pré-déformation de 2% simulant la cuisson des peintures des automobiles.

Les caractéristiques mécaniques ont été mesurées selon les normes NF EN ISO 6892-1, EN 485-1 et ASTM 1876 dans la direction perpendiculaire à la direction de laminage. La dimension des échantillons pour la mesure de module E était 60 x 20x1,5 mm. Le coefficient d'anisotropie plastique à 10 % de déformation plastique r₁₀ a été déterminé selon la norme ISO 10113. Le coefficient d'écrouissage en traction pour une déformation de 5% n₅ a été déterminé selon la norme ISO 10275.

Par ailleurs on a évalué la performance à l'emboutissage des tôles à l'état T4 à l'aide du test LDH (Limit Dome Height) comme décrit à l'exemple précédent. On a enfin déterminé la courbe limite de formage selon la norme ASTM E2218.

Les résultats des caractérisations sont donnés dans le tableau 7.

**Tableau 7 - Propriétés mécaniques des tôles minces en alliage J**

| | T4 | | | | | | | | Simulation cuisson peintures | | | | |
|---|---|---|---|---|---|---|---|---|---|---|---|---|---|
| Orie ntati on | E (GPa) | R_{p0,2} (Mpa) | Rₘ (Mpa) | Ag% | A% | r₁₀ | n₅ | LD H (m m) | E (GPa ) | R_{p0,2} (Mpa) | Rₘ (Mp a) | Ag % | A% |
| L | 78,5 | 101 | 217 | 18.8 | 22.0 | 0.74 | 0.2 6 | 26.9 | 78,7 | | | | |
| 45° | | 97 | 212 | 19.6 | 22.7 | 0.79 | 0.2 6 | | | | | | |
| TC | | 99 | 217 | 17.9 | 21.5 | 0.72 | 0.2 6 | 25.9 | | 166 | 234 | 12. 3 | 14. 7 |

La courbe limite de formage est présentée sur la Figure 3. La valeur minimale de la déformation majeure était de 19%.

L'alliage J présente une aptitude à la mise en forme particulièrement avantageuse.

On a caractérisé par microscopie optique sur une coupe L-TC au grossissement x500 à l'état brut de polissage la tôle selon l'invention en alliage J.

La micrographie obtenue est présentée sur la Figure 4. La distribution des particules de silicium est homogène et on n'observe pas d'agglomérats de particules. Une analyse statistique de la taille des particules de silicium et de leur distribution a été réalisée sur 60 champs de mesure pour une surface analysée de 3.4 mm². La fraction surfacique de particules de silicium était de 9.7%. La tôle selon l'invention présentait une fraction surfacique de particules de silicium supérieure à 9%. Pour une teneur en silicium plus élevée, on obtiendrait une fraction surfacique de particules de silicium encore plus élevée.

## Revendications

1. Tôle mince, dont l'épaisseur uniforme est comprise entre 0,20 mm et 6 mm, pour pièce de renfort ou de structure de carrosserie automobile en alliage d'aluminium de composition, en % en poids, :
Si : 10 - 14,
Mg : 0,05 - 0,8,
Cu : 0 - 0,2,
Fe : 0 - 0,5,
Mn : 0 - 0,5,
optionnellement au moins un élément choisi parmi Na, Ca, Sr, Ba, Yt et Li, la quantité dudit élément s'il est choisi étant de 0,01 - 0,05 pour Na, Ca, Sr, Ba Yt et 0,1 - 0,3 pour Li,
Sb : 0 - 0,05
Cr: 0 - 0,1
Ti : 0 - 0,2
autres éléments < 0,05 chacun et < 0,15 au total, reste aluminium,
**caractérisée en ce que** la tôle est dans un état T4.

2. Tôle selon la revendication 1 **caractérisée en ce que** Si : 11 - 13 % en poids.

3. Tôle selon une quelconque des revendications 1 à 2 **caractérisée en ce que** Cu : 0,03 - 0,15 % en poids.

4. Tôle selon une quelconque des revendications 1 à 3 **caractérisée en ce que** Fe : 0,1 - 0,3 % en poids.

5. Tôle selon une quelconque des revendications 1 à 4 **caractérisée en ce que** Mn : 0,05 - 0,2 % en poids.

6. Tôle selon une quelconque des revendications 1 à 4 **caractérisée en ce que** Mn : < 0,05 % en poids.

7. Tôle selon une quelconque des revendications 1 à 6 **caractérisée en ce que** Sr : 0,01 - 0,05 % en poids.

8. Tôle selon une quelconque des revendications 1 à 7 **caractérisée en ce que** Cr : 0,01 - 0,05 % en poids et/ou Ti 0,01 - 0,15 % en poids.

9. Tôle selon une quelconque des revendications 1 à 8, dont la teneur en magnésium est comprise entre 0,3 et 0,6 % en poids, ayant un module d'élasticité mesuré selon la norme ASTM 1876 d'au moins 77 GPa et de préférence d'au moins 79 GPa et au moins une parmi les caractéristiques suivantes, et de préférence l'ensemble des caractéristiques suivantes :
- une limite d'élasticité comprise entre 130 et 200 MPa et de préférence entre 140 et 190 MPa,
- un allongement à rupture A% d'au moins 15% et de préférence d'au moins 18%,
- Un allongement à striction Ag% d'au moins 13% et de préférence d'au moins 15 %.

10. Tôle selon une quelconque des revendications 1 à 8, dont la teneur en magnésium est comprise entre 0,1 et 0,3 % en poids, ayant un module d'élasticité mesuré selon la norme ASTM 1876 d'au moins 77 GPa et de préférence d'au moins 78 GPa et au moins une parmi les caractéristiques suivantes, et de préférence l'ensemble des caractéristiques suivantes :
- une limite d'élasticité comprise entre 80 et 150 MPa et de préférence entre 90 et 130 MPa,
- un allongement à rupture A% d'au moins 18% et de préférence d'au moins 20%,
- Un allongement à striction Ag% d'au moins 15% et de préférence d'au moins 17 %.

11. Tôle selon une quelconque des revendications 1 à 10 dont la fraction surfacique de particules de silicium observée sur une coupe L-TC au grossissement de x500 à l'état brut de polissage est au moins 8%, de préférence au moins 9% et de manière préférée au moins 10 %.

12. Procédé de fabrication d'une tôle mince selon une quelconque des revendications 1 à 11 comportant les étapes successives suivantes :
- la coulée typiquement semi-continue verticale d'une plaque de composition selon une quelconque des revendications 1 à 8 et optionnellement le scalpage,
- optionnellement l'homogénéisation,
- le réchauffage à une température comprise entre 400 et 560°C
- le laminage à chaud de la plaque en une bande d'épaisseur comprise entre 2 et 12 mm, et optionnellement le laminage à froid, jusqu'à l'épaisseur finale comprise entre 0,20 mm et 6 mm,
- la mise en solution de la tôle entre 500 et 560°C pendant 1 s à 5 min, suivi du refroidissement jusqu'à une température inférieure à 200 °C,
- optionnellement un traitement thermique à une température comprise entre 40 et 150 °C pendant une durée de 1 à 15 heures,
- le vieillissement à température ambiante d'au moins 3 jours pour obtenir un état T4.

13. Utilisation d'une tôle mince selon une quelconque des revendications 1 à 11 pour réaliser une pièce de renfort ou de structure de carrosserie automobile.

14. Procédé de réalisation d'une pièce de renfort ou de structure automobile comportant le procédé de la revendication 12, puis mise en forme typiquement par emboutissage, pliage et/ou roulage puis un traitement thermique de revenu, ce traitement thermique pouvant être réalisé simultanément à la cuisson des peintures.

15. Utilisation selon la revendication 13 ou procédé selon la revendication 14 dans laquelle ladite pièce de renfort ou de structure de carrosserie automobile a en service une limite d'élasticité d'au moins 220 MPa, de préférence d'au moins 250 MPa et un allongement à rupture d'au moins 6% et de préférence d'au moins 10 %.

## Patentansprüche

1. Blech, dessen gleichmäßige Dicke im Bereich zwischen 0,20 mm und 6 mm liegt, für ein Verstärkungs- oder Strukturteil einer Fahrzeugkarosserie aus Aluminiumlegierung mit folgender Zusammensetzung, in Gewichts-%:
Si: 10 - 14,
Mg: 0,05 - 0,8,
Cu: 0 - 0,2,
Fe: 0 - 0,5,
Mn: 0 - 0,5,
gegebenenfalls mindestens einem Element, ausgewählt aus Na, Ca, Sr, Ba, Yt und Li, wobei die Menge des Elements, wenn es ausgewählt ist, bei Na, Ca, Sr, Ba, Yt 0,01 - 0,05 beträgt und bei Li 0,1 - 0,3 beträgt,
Sb: 0 - 0,05
Cr: 0 - 0,1
Ti: 0 - 0,2
sonstige Elemente jeweils < 0,05 und insgesamt < 0,15, der Rest Aluminium,
**dadurch gekennzeichnet, dass** sich das Blech in einem Zustand T4 befindet.

2. Blech nach Anspruch 1, **dadurch gekennzeichnet, dass** Si: 11 - 13 Gewichts-%.

3. Blech nach einem der Ansprüche 1 bis 2, **dadurch gekennzeichnet, dass** Cu:
0,03 - 0,15 Gewichts-%.

4. Blech nach einem der Ansprüche 1 bis 3, **dadurch gekennzeichnet, dass** Fe:
0,1 - 0,3 Gewichts-%.

5. Blech nach einem der Ansprüche 1 bis 4, **dadurch gekennzeichnet, dass** Mn:
0,05 - 0,2 Gewichts-%.

6. Blech nach einem der Ansprüche 1 bis 4, **dadurch gekennzeichnet, dass** Mn:
< 0,05 Gewichts- %.

7. Blech nach einem der Ansprüche 1 bis 6, **dadurch gekennzeichnet, dass** Sr:
0,01 - 0,05 Gewichts-%.

8. Blech nach einem der Ansprüche 1 bis 7, **dadurch gekennzeichnet, dass** Cr:
0,01 - 0,05 Gewichts-% und/oder Ti 0,01 - 0,15 Gewichts-%.

9. Blech nach einem der Ansprüche 1 bis 8, dessen Magnesiumgehalt im Bereich zwischen 0,3 und 0,6 Gewichts-% liegt, mit einem nach der ASTM-Norm 1876 gemessenen Elastizitätsmodul von mindestens 77 GPa und vorzugsweise mindestens 79 GPa, und mindestens einem aus den folgenden Merkmalen, und vorzugsweise allen der folgenden Merkmale:
- eine Elastizitätsgrenze im Bereich zwischen 130 und 200 MPa und vorzugsweise zwischen 140 und 190 MPa,
- eine Bruchdehnung A% von mindestens 15 % und vorzugsweise mindestens 18 %,
- eine Einschnürdehnung Ag% von mindestens 13 % und vorzugsweise mindestens 15 %.

10. Blech nach einem der Ansprüche 1 bis 8, dessen Magnesiumgehalt im Bereich zwischen 0,1 und 0,3 Gewichts-% liegt, mit einem nach der ASTM-Norm 1876 gemessenen Elastizitätsmodul von mindestens 77 GPa und vorzugsweise mindestens 78 GPa, und mindestens einem aus den folgenden Merkmalen, und vorzugsweise allen der folgenden Merkmale:
- eine Elastizitätsgrenze im Bereich zwischen 80 und 150 MPa und vorzugsweise zwischen 90 und 130 MPa,
- eine Bruchdehnung A% von mindestens 18 % und vorzugsweise mindestens 20 %,
- eine Einschnürdehnung Ag% von mindestens 15 % und vorzugsweise mindestens 17 %.

11. Blech nach einem der Ansprüche 1 bis 10, dessen Flächenanteil von Siliciumteilchen, an einem L-TC-Schnitt mit 500-facher Vergrößerung im rohen Polierzustand betrachtet mindestens 8 %, vorzugsweise mindestens 9 % und bevorzugt mindestens 10 % beträgt.

12. Verfahren zur Herstellung eines Blechs nach einem der Ansprüche 1 bis 11, das die folgenden aufeinanderfolgenden Schritte umfasst:
- typischerweise semikontinuierlicher vertikaler Strangguss eines Barrens mit einer Zusammensetzung nach einem der Ansprüche 1 bis 8 und gegebenenfalls Fräsen,
- gegebenenfalls Homogenisierung,
- Wiedererhitzen auf eine Temperatur im Bereich zwischen 400 und 560 °C,
- Warmwalzen des Barrens zu einem Band mit einer Dicke im Bereich zwischen 2 und 12 mm, und gegebenenfalls Kaltwalzen bis auf die endgültige Dicke im Bereich zwischen 0,20 mm und 6 mm,
- Lösungsglühen des Blechs zwischen 500 und 560 °C über 1 s bis 5 min, gefolgt vom Abkühlen bis auf eine Temperatur von weniger als 200 °C,
- gegebenenfalls eine Wärmebehandlung bei einer Temperatur im Bereich zwischen 40 und 150 °C über eine Dauer von 1 bis 15 Stunden,
- Auslagern bei Umgebungstemperatur mindestens 3 Tage, um einen Zustand T4 zu erhalten.

13. Verwendung eines Blechs nach einem der Ansprüche 1 bis 11, um ein Verstärkungs- oder Strukturteil für eine Fahrzeugkarosserie herzustellen.

14. Verfahren zur Herstellung eines Fahrzeugverstärkungs- oder Fahrzeugstrukturteils, das das Verfahren nach Anspruch 12, anschließend das Formen typischerweise durch Ziehen, Biegen und/oder Walzen, anschließend eine Wärmebehandlung zur Auslagerung umfasst, wobei diese Wärmebehandlung gleichzeitig mit dem Einbrennen der Lacke ausgeführt werden kann.

15. Verwendung nach Anspruch 13 oder Verfahren nach Anspruch 14, wobei das Verstärkungs- oder Strukturteil einer Fahrzeugkarosserie im Einsatz eine Elastizitätsgrenze von mindestens 220 MPa, vorzugsweise von mindestens 250 MPa und eine Bruchdehnung von mindestens 6 % und vorzugsweise von mindestens 10 % aufweist.

## Claims

1. Sheet, with a uniform thickness of between 0.20 mm and 6 mm, for a reinforcing or structural part of a car body, consisting of an aluminium alloy of the following composition, in weight per cent:
Si: 10 - 14,
Mg: 0.05 - 0.8,
Cu: 0 - 0.2,
Fe: 0 - 0.5,
Mn: 0 - 0.5,
optionally at least one element selected from Na, Ca, Sr, Ba, Yt and Li, the quantity of said element if selected being between 0.01 and 0.05 for Na, Ca, Sr, Ba and Yt and between 0.1 and 0.3 for Li,
Sb: 0 - 0.05,
Cr: 0 - 0.1,
Ti: 0 - 0.2,
other elements < 0.05 each and < 0.15 total, remainder aluminium,
**characterised in that** the sheet is in T4 temper.

2. Sheet according to claim 1, **characterised in that** Si: 11 - 13 weight %.

3. Sheet according to either claim 1 or 2, **characterised in that** Cu: 0.03 - 0.15 weight %.

4. Sheet according to any one of claims 1 to 3, **characterised in that** Fe: 0.1 - 0.3 weight %.

5. Sheet according to any one of claims 1 to 4, **characterised in that** Mn: 0.05 - 0.2 weight %.

6. Sheet according to any one of claims 1 to 4, **characterised in that** Mn: < 0.05 weight %.

7. Sheet according to any one of claims 1 to 6, **characterised in that** Sr: 0.01 - 0.05 weight %.

8. Sheet according to any one of claims 1 to 7, **characterised in that** Cr: 0.01 - 0.05 weight % and/or Ti 0.01 - 0.15 by weight.

9. Sheet according to any one of claims 1 to 8, for which the magnesium content is between 0.3 and 0.6 by weight, having a modulus of elasticity measured according to ASTM standard 1876 equal to at least 77 GPa and preferably at least 79 GPa and the sheets have at least one among the following characteristics, and preferably all of the following characteristics:
- a yield stress between 130 and 200 MPa, and preferably between 140 et 190 MPa,
- an elongation at rupture A% equal to at least 15% and preferably at least 18%,
- An elongation at necking Ag% equal to at least 13% and preferably at least 15%.

10. Sheet according to any one of claims 1 to 8, for which the magnesium content is between 0.1 and 0.3 weight %, having a modulus of elasticity measured according to ASTM standard 1876 equal to at least 77 GPa and preferably at least 78 GPa and the sheets have at least one among the following characteristics, and preferably all of the following characteristics:
- a yield stress between 80 and 150 MPa, and preferably between 90 et 130 MPa,
- an elongation at rupture A% equal to at least 18% and preferably at least 20%,
- an elongation at necking Ag% equal to at least 15% and preferably at least 17%.

11. Sheet according to any one of claims 1 to 10, in which the ratio of the surface covered by silicon particles observed on an L-TC section with a magnification of x500 in the as-polished state is at least 8%, preferably at least 9% and even more preferably at least 10%.

12. Method of manufacturing a sheet according to any one of claims 1 to 11, including the following successive steps:
- the typically semi-continuous vertical casting of a slab with a composition according to any one of claims 1 to 8 and optionally scalping,
- optionally homogenisation,
- heating to a temperature of between 400 and 560°C
- hot rolling of the slab into a strip between 2 and 12 mm thick, and optionally, cold rolling to the final thickness, between 0.20 mm and 6 mm.
- solution heat treatment of the sheet at between 500 and 560°C for between 1 second and 5 minutes, following by cooling to a temperature below 200°C,
- optionally, a heat treatment at a temperature between 40 and 150°C for a duration of 1 to 15 hours,
- ageing at ambient temperature for at least 3 days to obtain a T4 temper.

13. Use of a sheet according to any one of claims 1 to 11 to make a reinforcing or structural part of a car body.

14. Method of manufacturing of car body reinforcing or structural part comprising the method according claim 12 and is then shaped typically by stamping, folding and/or rolling followed by an aging heat treatment, this heat treatment being able to be carried out simultaneously with the baking of the paints.

15. Use according to claim 13 or method according to claim 14 in which said car body reinforcing or structural part has a yield stress in service of at least 220 MPa, and preferably at least 250 MPa and an elongation at rupture of at least 6% and preferably at least 10%.
